Europäisches Patentamt

European Patent Office

Office européen des brevets

(11) Publication number: **0 283 580 B1**

# EUROPEAN PATENT SPECIFICATION

(45) Date of publication of patent specification: **06.05.92** (51) Int. Cl.⁵: **G06F 13/30**, G06F 13/36

(21) Application number: **87118542.7**

(22) Date of filing: **15.12.87**

(54) Computer system with direct memory access channel arbitration.

(30) Priority: **27.03.87 US 30788**

(43) Date of publication of application:
**28.09.88 Bulletin 88/39**

(45) Publication of the grant of the patent:
**06.05.92 Bulletin 92/19**

(84) Designated Contracting States:
**AT BE CH DE ES FR GB GR IT LI LU NL SE**

(56) References cited:
**WO-A-80/02608**
**US-A- 3 925 766**
**US-A- 4 371 932**

**IBM TECHNICAL DISCLOSURE BULLETIN, vol. 27, no. 5, October 1984, pages 3150-3152, New York, US; G.T. DAVIS: "Multiplexing of interrupt and DMA request lines"**

**IEEE STANDARD 696 INTERFACE DEVICES, 13th June 1983, pages 1-40, New York, US; IEEE**

(73) Proprietor: **International Business Machines Corporation**
**Old Orchard Road**
**Armonk, N.Y. 10504(US)**

(72) Inventor: **Concilio, Ian Anthony**
**6361 Walk Circle**
**Boca Raton Florida 33433(US)**
Inventor: **Hawthorne, Jeffrey Alan**
**1002 Biltmore Drive**
**Atlanta Georgia 30329(US)**
Inventor: **Heath, Chester Asbury**
**681 NE 30th Place**
**Boca Raton Florida 33433(US)**
Inventor: **Lenta, Jorge Eduardo**
**18320 181 Circle South**
**Boca Raton Florida 33433(US)**
Inventor: **Nguyen, Long Duy**
**9666 Oregon Road**
**Boca Raton Florida 33433(US)**

(74) Representative: **Killgren, Neil Arthur**
**IBM United Kingdom Limited Intellectual Property Department Hursley Park Winchester Hampshire SO21 2JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a computer system having DMA (Direct Memory Access) available to peripheral units associated therewith.

Many present-day computer systems employ DMA channels to allow peripheral devices to transfer data, primarily to and from the main memory, without going through the CPU (Central Processing Unit). Bypassing the CPU of course has the advantage of increased data transfer rates and improved overall system efficiency because the CPU is free to perform other tasks during the data transfer.

The most common practice to date has been to provide one physical DMA channel for every peripheral unit that is allowed DMA access. An example of such a computer system is the IBM PC computer.

However, the number of peripheral devices which a user may attach to his or her computer system has been increasing and is expected to continue to do so. For instance, there have become available optical disk readers, additional communications devices, hard files, auxiliary memory devices, etc., all of which can make advantageous use of DMA access.

On the other hand, adding further physical DMA channels is costly of system hardware, including IC count, board space, and bus space. It has been considered to share DMA channels among peripheral devices with the restriction of mutually exclusive operation. Sharing of DMA channels is employed in, for instance, the IBM XT and AT computer systems. These schemes though require extensive modifications to the operating system as additional subroutines are required to prevent the peripheral devices associated with each DMA channel from operating simultaneously. A significant performance burden is also created when file controller are not sufficiently "intelligent" to allow overlapped "seek" operations. The problem is compounded in certain situations, for example when a LAN (Local Area Network) feature and a file controller share the same DMA level and a "LAN file Server" routine must trade back and forth between the two devices.

One approach to these problems is disclosed in IBM Technical Disclosure Bulletin Volume 27, No 5 October 1984, on pages 3150 to 3152. In this approach, the central processor issues a sequence of numbers defining time slots to which only peripheral devices having a corresponding wired - in number can respond for access to the DMA. This arrangement is particularly suitable for a multiple processor configuration, where each processor is itself confined to designate the time slots on a multiplexed bus to which it will respond.

A more flexible arrangement is disclosed in EP-A-0 288 607 which describes a computer system employing peripherals which are each provided with an arbitration circuit. The arbitration circuits are interconnects with one another and with a central arbitration circuit via an arbitration bus. When one of the peripherals desires access to a DMA channel, it places on the arbitration bus its channel priority assignment. If its channel priority assignment has the highest priority, that peripheral is assigned an available DMA channel. In this manner, peripherals can be added to the system without having to provide additional DMA channels and DMA channel request lines.

However, sometimes it may be desired to use in such a computer system an existing peripheral that does not have an arbitration circuit. A peripheral not having an arbitration circuit cannot be added directly to that system since it has no way of requesting access to a DMA channel.

Accordingly, it is an object of the present invention to provide a computer system of the type in which peripherals request DMA access through the use of an arbitration bus, but which can also accommodate peripherals which do not have their own arbitration circuit.

US-A-3,925,766 to Bardotti et al. discloses a computer system wherein peripheral devices are assigned priority levels, and requests for access to communicate with a memory are selected according to the priority levels. The priority level assignments can be changed according to the causes for which the request signals are generated or the particular load conditions of the central processor. No DMA paths are provided, however.

In US-A-4,400,771 to Suzuki et al. there is shown a multi-processor system in which each of the multiple processors can access a single memory. A programmable register circuit stores priority information designating a memory access grade priority for each of the processors. The priority information can be changed manually, by an external circuit, or by at least one of the processors. The Suzuki et al. patent does not though employ DMA access to a memory from plural peripheral devices.

The following United States patents are mentioned for general background teachings related to computer systems employing DMA controllers: 4,371,932 to Dinwiddie, Jr., et al., 4,419,728 to Larson, 4,538,224 to Peterson, 4,556,962 to Brewer et al., and 4,584,703 to Hallberg.

In accordance with the present invention we provide a computer system comprising a central processor unit (CPU), a direct memory access controller DMA, a common bus for coupling a plurality of peripheral devices to the DMA, a plurality of said peripheral devices each including arbitration means to send arbitration data on an arbitration bus for determining access to said common bus by one of said peripheral devices requesting access to a DMA channel in accordance with the arbitration data from the device arbitration means, a central arbitration control circuit to determine which channel of the DMA is to be assigned to the winning peripheral, further peripheral devices include no such arbitration means and which are connected to interrupt the processor unit to indicate a request for the use of the DMA, and a soft request arbitration unit which receives the CPU arbitration data related to one of the further peripheral devices from when interrupted by said one further peripheral device, said soft request arbitration unit being operable to place arbitration data on said arbitration bus on behalf of said one further peripheral derive in response to said arbitration data from the CPU.

An embodiment of the invention will now be described, by way of example, with reference to the accompanying drawings, in which:

FIG. 1 is a block diagram of a computer system employing the present invention;

FIG. 2 is a logic diagram of a soft request arbitration unit used in the computer system of FIG. 1;

FIG. 3 is a logic diagram of a soft arbiter circuit employed in the soft request arbitration unit of FIG. 2;

FIG. 4 is a waveform diagram showing some of the signals in the circuit of FIG. 3 and used to explain the operation of the circuit of FIG. 3;

FIG. 5 is a flowchart showing operations of the CPU in initiating a request for a "soft" arbitration;

FIG. 6 is a flowchart showing steps in a diagnostic routine in which the present invention is used to advantage; and

FIG. 7 is a logic diagram of a soft request arbitration unit constructed in accordance with an alternate embodiment of the invention.

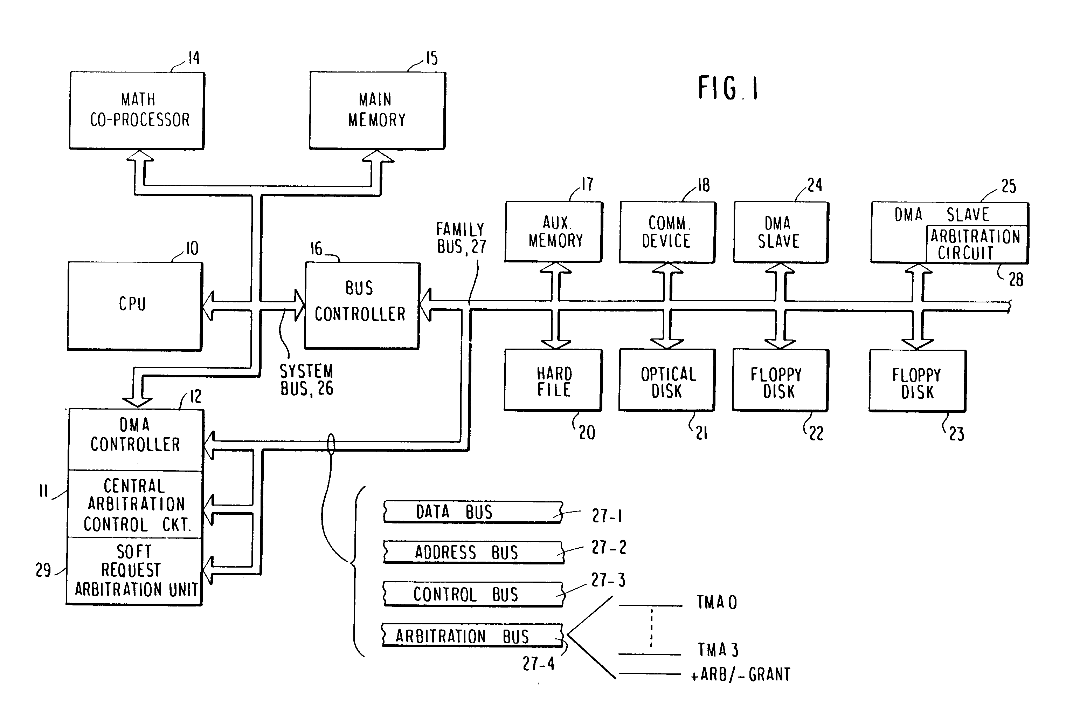

Referring first to FIG. 1 of the drawings, there is shown a block diagram of a computer system employing the invention.

A CPU 10 communicates over a system bus 26 with a main memory 15 and, optionally, a math co-processor. Various other units can be connected to the system bus 26 as requirements dictate. A "family" bus 27, to which various peripheral devices (sometimes termed merely "peripherals" or "attachments") are connected, is coupled to the system bus 26 via a bus controller. The arrangement thus far described is well known.

Many different types of peripherals can be connected to the family bus 27, the examples shown in FIG. 1 being an auxiliary memory 17, a communications device 18, a hard file 20, an optical disk 21, and two floppy disks 22 and 23. The family bus 27 is also routed to a DMA controller 12 and central arbitration circuit 11. As shown in the diagram in the lower part of FIG. 1, the family bus includes a data bus 27-1, an address bus 27-2, a control bus 27-3, and an arbitration bus 27-4.

In the computer system some of the peripherals, represented generically by DMA slave 25, are provided with their own arbitration circuit 2. When a peripheral having an arbitration circuit 28 wishes the use of a DMA channel, the peripheral transmits its channel priority assignment onto the arbitration bus 27-4. At the end of a defined arbitration period, the value on the arbitration bus will be the channel priority assignment value having the highest priority among the peripherals concurrently requesting the use of a DMA channel. The central arbitration control circuit 11 then informs the DMA controller which DMA channel is to be assigned to the winning peripheral.

In accordance with the present system, however, peripherals not having their own arbitration circuit, represented by DMA slave 24, can also request and be granted the use of a DMA channel. The manner in which this is done will now be explained in detail.

To allow DMA access to peripherals not having their own arbitration circuit 28, a "soft request" arbitration unit 29 is provided. The purpose of the soft request arbitration unit 29 is to arbitrate, under instructions received from the CPU, on behalf of peripherals not having their own arbitration circuit 28. In this manner, existing peripherals can be mixed on the same bus with peripherals having their own arbitration circuit 28.

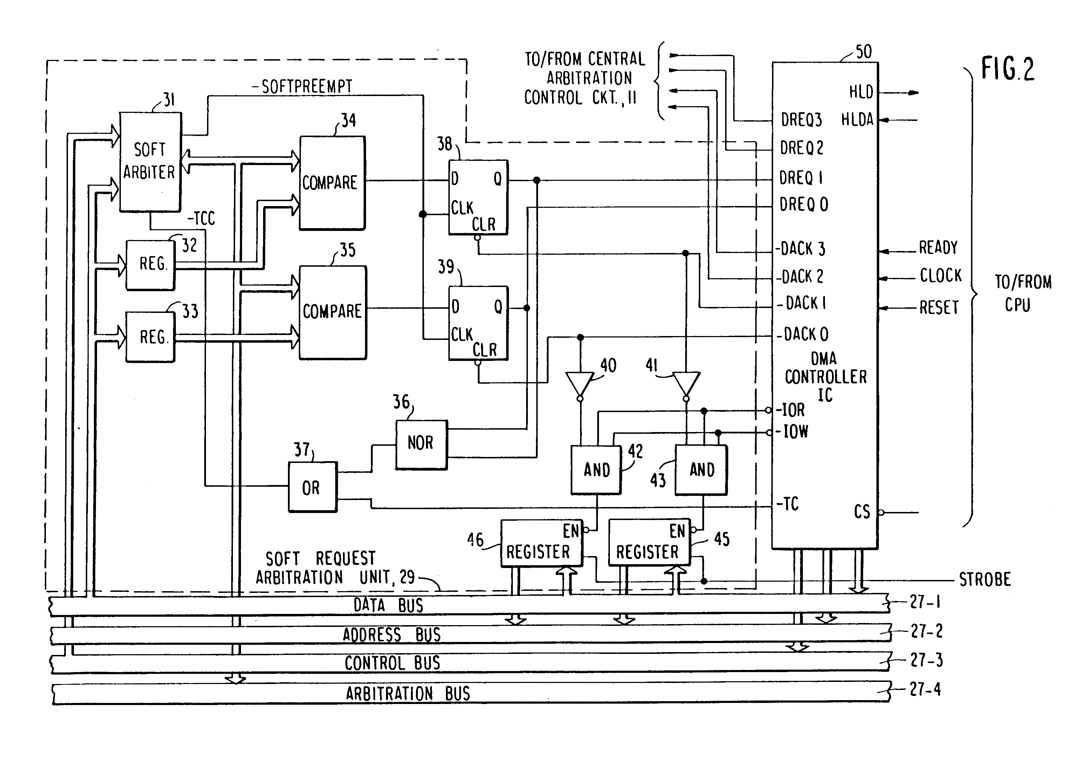

FIG. 2 shows the details of the soft request arbitration circuit 29 and its connections to the DMA controller 12 and the central arbitration control circuit 11.

Inputs to a soft arbiter 31 and two registers 32 and 33 are supplied from the data bus 27-1. The soft arbiter 31 is also coupled to the arbitration bus 27-4. Certain control signals from the control bus 27-3 are also applied to the soft arbiter 31. Two comparators 34 and 35 each also have one input port coupled to the arbitration bus. The second input ports of the comparators 34 and 35 receive the outputs of the registers 32 and 33, respectively. The outputs of the comparators are connected to the D inputs of respective flip-flops 38 and 39, the clock inputs of which are supplied by a signal -SOFTPREEMPT (the "-" sign indicating a low truth signal, i.e., a signal having as its active state a logical "0") from the soft arbiter 31. The Q outputs of the flip-flops 38 and 39 are connected to the DMA channel request inputs DREQ1 and DREQ0 of a DMA controller IC 50. The flip-flops 38 and 39 are cleared by respective acknowledge signals -DACK1 and -DACK0. The DMA controller IC 50 generates a signal -TC (Terminal Count) which indicates when the final data transfer operation on any channel has been completed. To reset the soft arbiter 31 when the requested number of data transfer operations has been completed for its two channels, the signal -TC is gated by the outputs of the comparators 34 and 35 using a NOR gate 36 and an OR gate 37 to produce the signal -TCC. Thus, -TCC becomes active in the presence of a pulse of -TC when there is an active DMA request on either of the two channels with which the soft arbiter 30 is associated.

It is assumed that the DMA controller IC is an Intel Corporation type 8237 programmable DMA controller. In this case, the CPU may be any of the Intel iAPX 86 series of microprocessors, such as the 8088, 8086 or 80286. For details of the interconnections between the DMA controller IC and the CPU, reference may be made to the 1985 Intel Microsystem Components Handbook, pages 2-57 to 2-71.

The -DACK0 and -DACK1 signals are applied through inverters to inputs of two AND gates 42 and 43, the other inputs of which are supplied by the signals -IOR and -IOW (Input-Output Read and Input-Output Write) from the DMA controller IC 50. The outputs of the AND gates and connected to the enable inputs EN of respective registers 45 and 46. A clocking signal STROBE from the CPU is applied to the clock inputs of the registers 45 and 46. The input ports of the registers 45 and 46 are connected to the data bus 27-1, and the output ports are connected to the address bus 27-2.

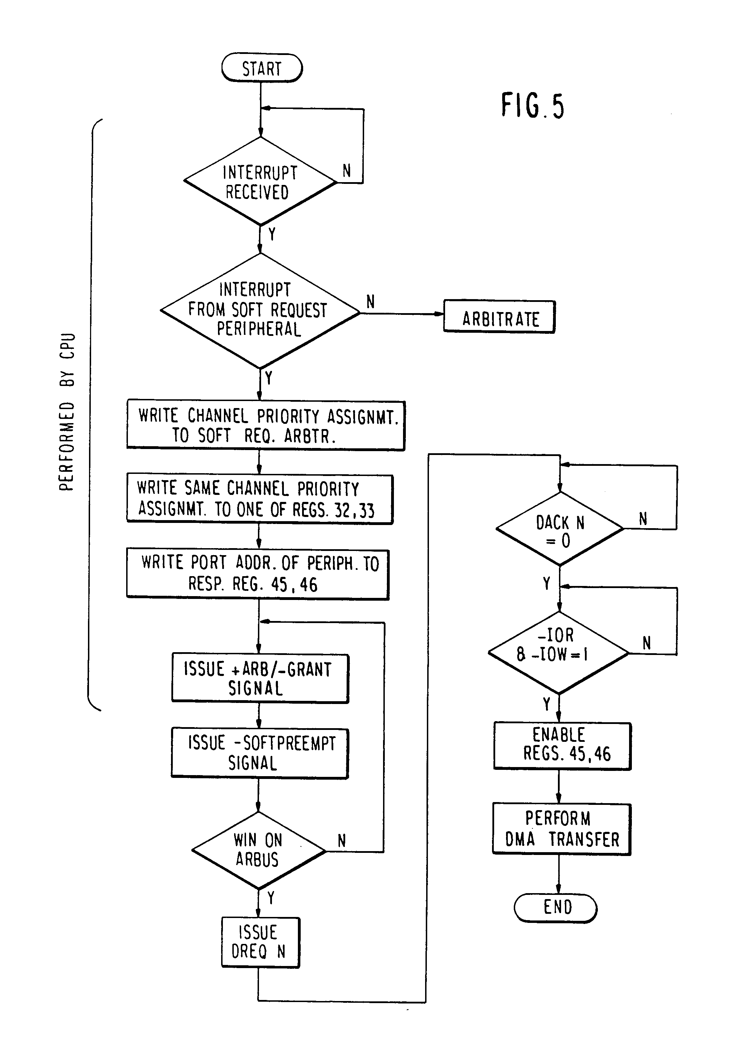

The operation of the soft arbitration unit 29 will now be explained in detail with reference to the flowchart of FIG. 5.

The CPU waits for an interrupt signal to be received from one of the peripherals, indicating a request for the use of a DMA channel. If the request is from one of the peripherals having its own arbitration circuit 28, arbitration and DMA channel acquisition are carried out in the manner described in the above mentioned application. On the other hand, if the request is from one of the peripherals not having its own arbitration circuit 28, that is, if the peripheral making the request is one of the "soft request" peripherals, a channel priority assignment, corresponding in function to the channel priority assignments for peripherals having their own arbitration circuit 28, is sent to the soft arbiter 31. The same channel priority assignment value is written to one of the registers 32 and 33, the one chosen being dependent upon the DMA channel to be assigned to the peripheral should it "win" the subsequent arbitration among peripherals for an assignment.

In the present example, two registers 32 and 33, two flip-flops 38 and 39, two registers 45 and 46, etc., are provided to (1) allow arbitration to take place simultaneously between two different peripherals having no arbitration circuit (in which case the above steps should of course be repeated for the second peripheral), and (2) allow a choice for DMA channel assignment for soft request peripherals between two different DMA channels, channels 1 and 0, respectively, (the channels corresponding to DREQ1 and DREQ0 on the DMA controller IC 50). Of course, other numbers of these devices may be employed depending upon the number soft request peripherals accommodated concurrently and the number of DMA channels to be made available to the soft request peripherals.

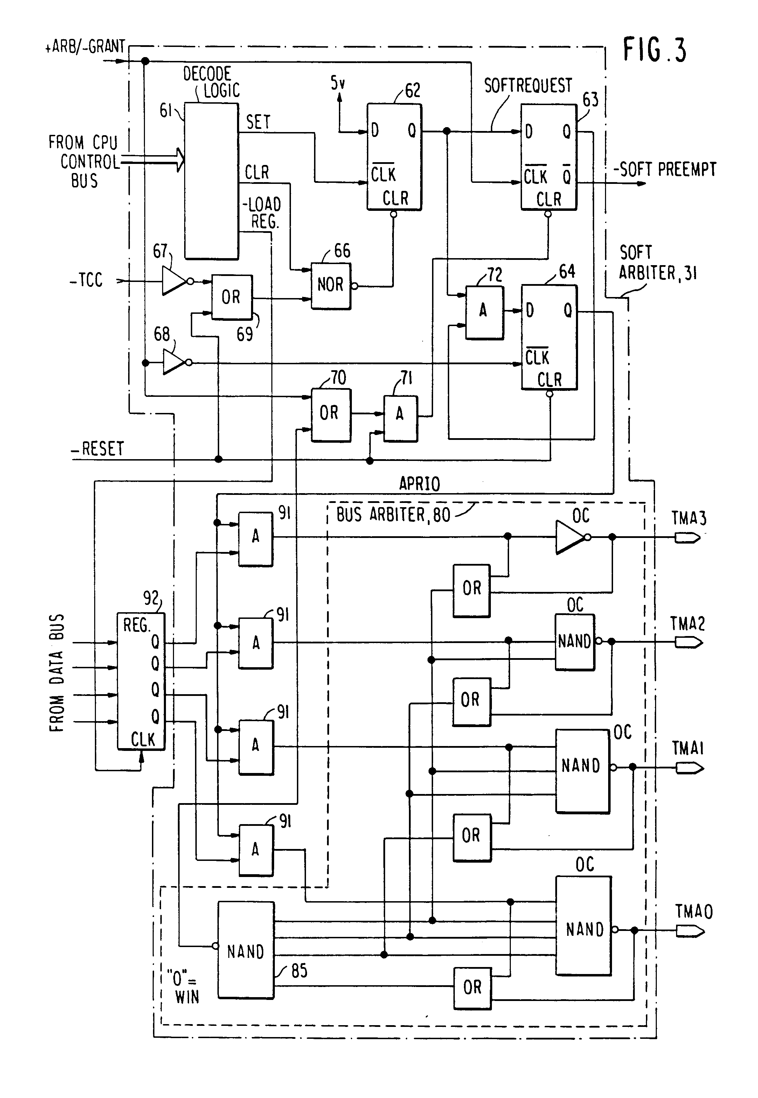

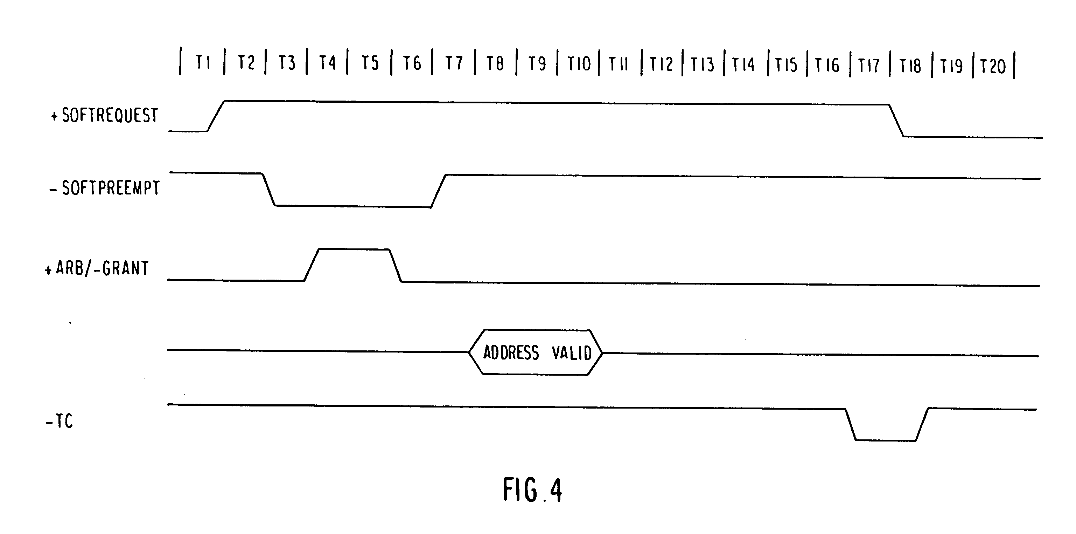

Further, the port address of the requesting peripheral is written to the one of the registers 45 and 46 corresponding to the selected DMA channel, (channels 1 and 0, respectively). A signal +ARB/-GRANT on the control bus is then issued to the soft arbiter 31. (This will be explained in detail below with reference to FIGS. 3 and 4.) Arbitration among peripherals, both those with their own arbitration circuits and those without, then takes place on the arbitration bus 27-4.

After sufficient time has passed to allow the arbitration process to be completed, a signal -SOFTPREEMPT from the soft arbiter 31 undergoes a transition to the "1" state. If a soft request peripheral has won the arbitration, a "1" will appear at the output of one of the comparators 34 and 35, and a "1" is then clocked into one of the flip-flops 38 and 39. This activates one of the DMA channel request lines DREQ0 or DREQ1 to the DMA controller IC 50. The request will be acknowledged by the DMA controller IC 50 by setting the corresponding one of its acknowledge lines -DACK0 and -DACK1 in the "0" state. When the signals -IOR and -IOW are in the "1" state, indicating that DMA input/output access is now allowed, the respective one of the registers 46 and 47 is enabled to place the peripheral port address stored therein on the address bus 27-2. A DMA data transfer then is effected in a manner well-known in the art.

FIG. 3 is a logic diagram of the soft arbiter 31.

The channel priority assignment is written in the register 92 when a decode logic 61 detects the respective address. This operation is achieved using an ordinary port addressing scheme. With the register 92 loaded with the channel priority assignment, when the CPU sends an instruction to the decode logic 61 that a soft request arbitration cycle is to take place, a SET signal is produced by the decode logic 61 which clocks a flip-flop 62, resulting in the signal +SOFTREQUEST being set to the active state. (See Fig. 4.) When a subsequent pulse of the arbitration period marking signal +ARB/-GRANT is received, a flip-flop 63 is clocked, issuing the signal -SOFTPREEMPT. Also, the output of a flip-flop 64 is then clocked high, activating the signal APRIO which causes the bus arbiter 80 to place the channel priority assignment on the arbitration bus.

Arbitration for the arbitration bus takes place when +ARB/-GRANT is active. At the end of the arbitration period +ARB/-GRANT returns to the low state. If the arbitration bus has been won, the output of a NAND gate 85 in the bus arbiter 80 goes low, resetting the flip-flop 63 (via an OR gate 70 and AND gate 71), hence returning -SOFTPREEMPT to its inactive (high) state. This transition clocks the flip-flops 38 and 39, sending a request signal to the DMA controller IC 50. the signal APRIO is held high (to keep the channel priority assignment on the arbitration bus) since both inputs to an AND gate 72 are high, placing a high level on the input of the flip-flop 64. The peripheral's address is subsequently placed on the address bus 27-2 in the manner already described. When the data transfer has been completed, -TC appears, causing the generation of a pulse of -TCC. The flip-flop 62 is then reset (via an inverter 67, OR gate 69 and NOR gate 66), deactivating the +SOFTREQUEST signal.

The bus arbiter 80, which performs the actual arbitration operation on the arbitration bus 27-4, is a circuit as disclosed and discussed in detail in American National Standard/IEEE Standard No. ANSI/IEEE Std 696-1983, published by the Institute of Electrical and Electronics Engineers, Inc., June 13, 1983. In general, each device incorporated in the arbitration scheme is provided with such a circuit, and the circuits are connected together via an arbitration bus. The arbitration bus in the example shown has four data lines TMA0 - TMA3, allowing for 16 different arbitration levels. Any desired number though can be used. During a designated arbitration time period, all devices desiring to gain control over the bus transmit their arbitration levels onto the bus. This occurs when the signal APRIO goes to the "1" state. That is, in the present instance, the value then held in the register 92 (the channel assignment priority value, which is the arbitration level for the device) is gated through the AND gates 91 to the bus arbiter 80, and thence onto the arbitration bus lines TMA0 - TMA3. At the end of the arbitration period, the value on the lines TMA0 - TMA3 will be the value of the arbitration level of the device having the highest level.

Besides providing the computer system with a way of accommodating peripherals not having their own arbitration circuit, the invention is also quite useful as a diagnostics tool.

During a diagnostics routine, such as is ordinarily performed at the power-on time, for instance, each DMA channel is tested in sequence. That is, the soft request DMA routine explained above is carried out in sequence for each channel.

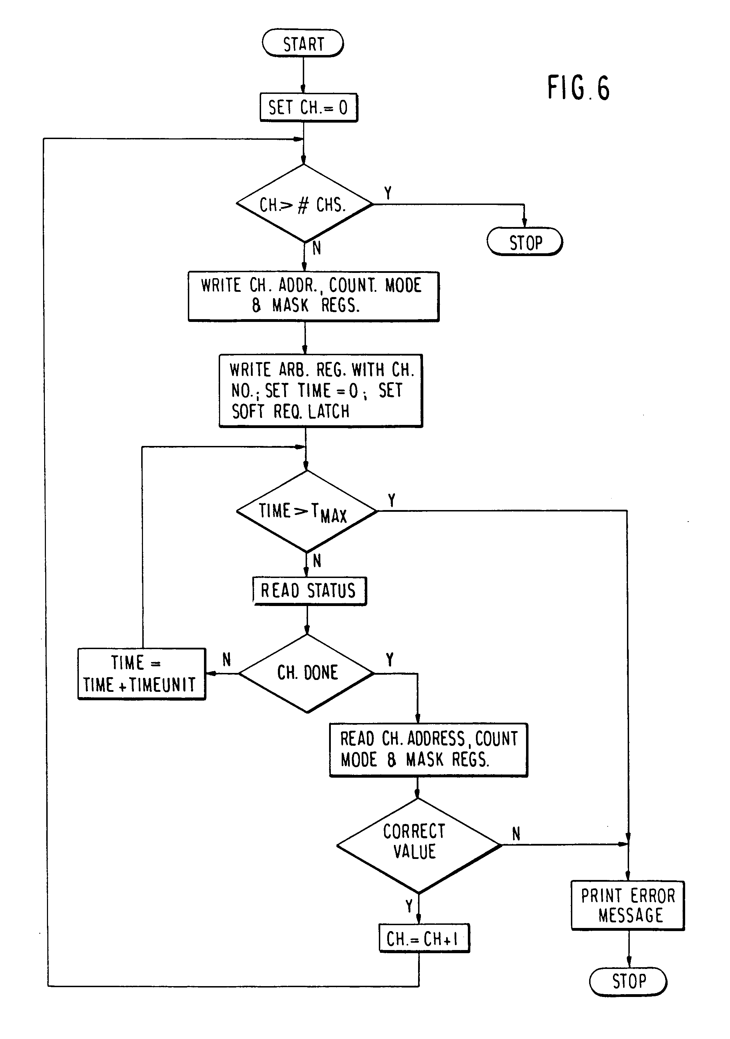

An example of such a diagnostics routine will be explained with reference to the flowchart of FIG. 6.

To test all DMA channels in sequence, the channel number is first set to 0. Since the channel number is less than the total number of DMA channels provided in the system, the channel address, count, mode and mask registers are written to. Next, the arbitration value register, namely, the register 92 shown in Fig. 3, is written to with the channel number, a time counter is set to 0, and control signals are sent to the decode logic 61 of the soft arbiter 31 to cause the +SOFTREQUEST signal to go to the "1" state, thereby to trigger a soft request arbitration cycle. If the time counter has not exceeded a maximum time $T_{max}$, the current status is read from the status register of the DMA controller IC. When the arbitration cycle has been completed, the channel address, count, mode and mask registers are read. If they contain the correct values, it is determined that the channel is operating properly, and the next channel is tested in the same manner. If not, an error message is displayed. An error message is also displayed if the time counter exceeds $T_{max}$ before being able to read the correct information from the various registers.

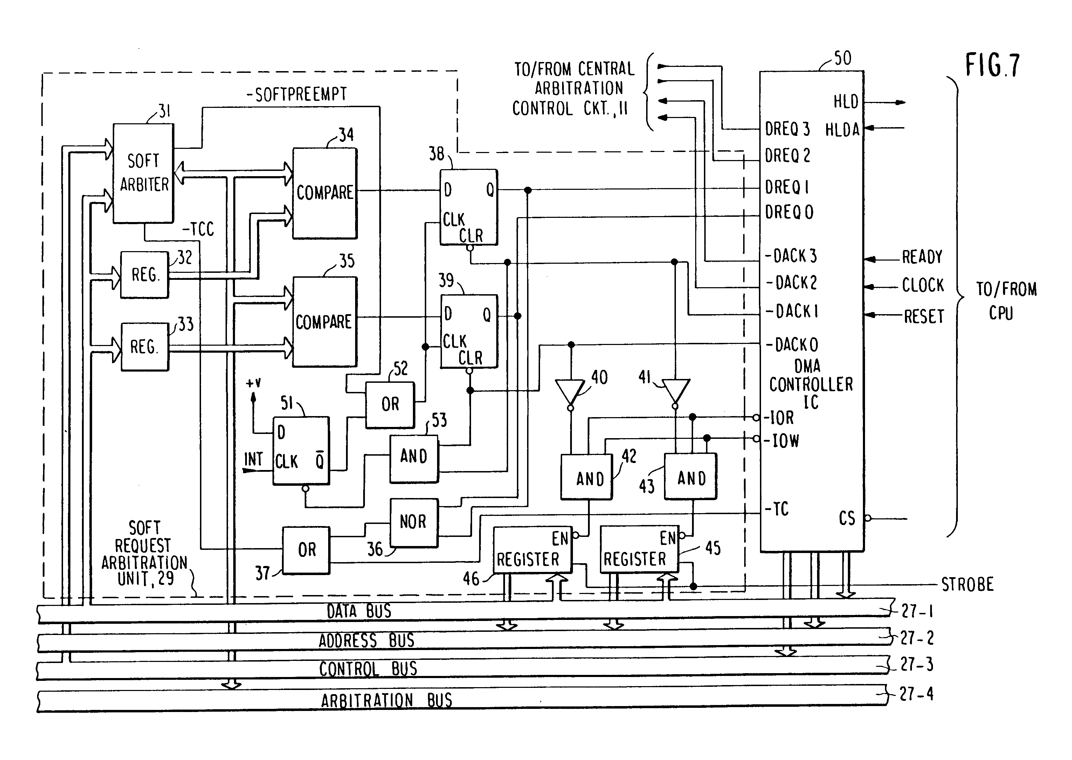

An alternate embodiment of the invention will be described with reference to FIG. 7.

Different peripherals can transfer (receive and transmit) data at different maximum rates. If a peripherals maximum data transfer rate is slower than what the DMA channel is capable of, it could occur that a peripheral associated with the soft request arbitration unit would be overrun with incoming data. To prevent this from occurring, in accordance with the alternate embodiment of the invention, the interval between allowed soft request arbitration cycles is controlled in such a manner that the peripheral is never overrun with data.

In the embodiment depicted in FIG. 7, this is done by throttling the -SOFTPREEMPT signal so that DMA requests can be generated only at a predetermined maximum rate. For this purpose, an interrupt signal INT is generated at an interval corresponding to the desired maximum DMA request rate. When the signal INT is received, it clocks a flip-flop 51. The output of the flip-flop 52 gates the -SOFTPREEMPT signal on and off via an OR gate 52. After a soft request cycle has been completed, the flip-flop 51 is reset by one of the acknowledge signals -DACK0 and -DACK1 via an AND gate 53. No further soft request cycles are permitted until the signal INT again appears.

## Claims

1. A computer system comprising a central processor unit (CPU) (10), a direct memory access controller DMA (12), a common bus (27) for coupling a plurality of peripheral devices (17, 18, 20-25) to the DMA, a plurality of said peripheral devices each including arbitration means (28) to send arbitration data on an arbitration bus (27-4) for determining access to said common bus by one of said peripheral devices requesting access to a DMA channel in accordance with the arbitration data from the device arbitration means, a central arbitration control circuit (11) to determine which channel of the DMA (12) is to be assigned to the winning peripheral, further peripheral devices (24) which include no such arbitration means and which are connected to interrupt the processor unit (10) to indicate a request for the use of the DMA, and a soft request arbitration unit (29) which receives arbitration data related to one of the further peripheral devices from the CPU when interrupted by said one further peripheral device, said soft request arbitration unit being operable to place arbitration data on said arbitration bus on behalf of said one further peripheral device in response to said arbitration data from the CPU.

2. A computer system according to claim 1, in which said soft request arbitration unit includes means (32, 33) for storing arbitration data from said CPU and means (34, 35) for comparing data on said arbitration bus with said stored arbitration data for selecting a DMA channel when the compared data is equal.

3. A computer system according to claim 2, including a plurality of said means for sorting, and said means for comparing and selecting.

4. A computer system according to claim 3, in which different areas of said means (32, 33) for storing store different arbitration data from the CPU for simultaneously arbitrating on behalf of a plurality of the peripheral units.

5. A computer system according to claim 3 or claim 4, in which different ones of said means (32, 33) for storing store different arbitration data from the CPU for different arbitration levels for a single peripheral.

6. A computer system according to any of the previous claims including a data bus (27-1) and an address bus (27-2) interconnecting the CPU 10 and the peripheral devices, said soft request arbitration means (29) including a plurality of registers (43, 46), each register having an input port coupled to said data bus and an output port coupled to said address bus for placing address data indicative of an assigned peripheral unit for communicating with an assigned DMA channel.

## Revendications

1. Système d'ordinateur comprenant une unité centrale (UC) (10), un contrôleur d'accès direct à la mémoire ADM (12), un bus commun (27) pour coupler une pluralité de dispositifs périphériques (17; 18, 20 à 25) au contrôleur d'accès direct à la mémoire, une pluralité desdits dispositifs périphériques comportant chacun des moyens d'arbitrage (28) pour envoyer des données d'arbitrage sur un bus d'arbitrage (27-4) pour déterminer l'accès audit bus commun par un desdits dispositifs périphériques qui demande l'accès à un canal du contrôleur d'accès direct à la mémoire en conformité avec les données d'arbitrage provenant des moyens d'arbitrage du dispositif, un circuit de commande d'arbitrage central (11) pour déterminer quel canal du contrôleur d'accès direct à la mémoire (12) doit être attribué au périphérique vainqueur, des dispositifs périphériques supplémentaires qui ne comportent pas un tel moyen d'arbitrage et qui sont connectés au système d'interruption de l'unité centrale (10) pour indiquer une demande pour l'utilisation du contrôleur d'accès direct à la mémoire et une unité d'arbitrage de demande programmable (29) qui reçoit les données d'arbitrage qui se rapportent à un des dispositifs périphériques supplémentaires à partir de l'unité centrale lorsqu'interrompue par le dispositif périphérique supplémentaire, ladite unité d'arbitrage de demande programmable pouvant agir pour placer les données d'arbitrage sur le bus d'arbitrage sous le nom dudit dispositif périphérique supplémentaire en réponse auxdites données d'arbitrage provenant de l'unité centrale.

2. Système d'ordinateur selon la revendication 1, dans lequel ladite unité d'arbitrage de demande programmable comporte des moyens (32, 33), pour mémoriser les données d'arbitrage provenant de ladite unité centrale et des moyens (34, 35) pour comparer les données sur le bus d'arbitrage avec les données d'arbitrage mémorisées pour sélectionner un canal du contrôleur d'accès direct à la mémoire lorsque les données comparées sont égales.

3. Système d'ordinateur selon la revendication 2, comportant une pluralité desdits moyens pour filtrer et desdits moyens pour comparer et sélectionner.

4. Système d'ordinateur selon la revendication 3, dans lequel différentes zones desdits moyens (32, 33) pour mémoriser mémorisent différentes données d'arbitrage provenant de l'unité centrale pour arbitrer simultanément sur le nom d'une pluralité des unités périphériques.

5. Système d'ordinateur selon la revendication 3 ou la revendication 4, dans lequel différents moyens pour mémoriser parmi lesdits moyens pour mémoriser (32, 33) mémorisent différentes données d'arbitrage provenant de l'unité centrale pour différents niveaux d'arbitrage pour un seul périphérique.

6. Système d'ordinateur selon l'une quelconque des revendications précédentes, comportant un bus de données (27-1) et un bus d'adresses (27-2) interconnectant l'unité centrale (10) et les dispositifs périphériques, ledit moyen d'arbitrage de demande programmable (29) comportant une pluralité de registres (43, 46), chaque registre ayant des entrées coupées audit bus de données et des sorties couplées audit bus d'adresses pour placer les données d'adresse indicatives d'une unité périphérique attribuée pour communication avec un canal attribué du contrôleur d'accès direct à la mémoire.

**Patentansprüche**

1. Rechnersystem, das aufweist: eine Zentraleinheit (CPU) (10), eine Steuereinheit (12) mit direktem Speicherzugriff DMA, einen gemeinsamen Bus (27) zum Verbinden einer Mehrzahl peripherer Einrichtungen (17, 18, 20-25) mit der DMA, wobei jede aus einer Mehrzahl der peripheren Einrichtungen Arbitrationsmittel (28) aufweist, um Arbitrationsdaten auf einem Arbitrationsbus (27-4) zu senden, um einen Zugriff auf den gemeinsamen Bus von einer der peripheren Einrichtungen zu bestimmen, die einen Zugriff auf einen DMA-Kanal entsprechend den Arbitrationsdaten aus den Einrichtungsarbitrationsmitteln anfordern, eine zentrale Arbitrationssteuerschaltung (11), um zu bestimmen, welcher Kanal der DMA (12) der gewinnenden Peripherieeinrichtung zugewiesen werden soll, weitere periphere Einrichtungen (24), die keine solche Arbitrationsmittel aufweisen und die zum Unterbrechen der Zentraleinheit (10) geschaltet sind, um eine Anforderung für die Verwendung der DMA anzuzeigen und eine Arbitrationseinheit (29) für eine Soft-Anforderung, die zu einer der weiteren peripheren Einrichtungen in Beziehung stehende Arbitrationsdaten aus der CPU empfängt, wenn von der einen weiteren peripheren Einrichtung unterbrochen, wobei die Arbitrationseinheit für eine Soft-Anforderung betriebsfähig ist, um Arbitrationsdaten auf dem Arbitrationsbus für die eine weitere periphere Einrichtung entsprechend den Arbitrationsdaten aus der CPU zu geben.

2. Rechnersystem nach Anspruch 1, bei welchem die Arbitrationseinheit für eine Soft-Anforderung aufweist: Mittel (32, 33), um Arbitrationsdaten aus der CPU zu speichern und Mittel (34, 35), um Daten auf dem Arbitrationsbus mit den gespeicherten Arbitrationsdaten zu vergleichen, um einen DMA-Kanal auszuwählen, wenn die verglichenen Daten identisch sind.

3. Rechnersystem nach Anspruch 2, das eine Mehrzahl der Mittel zum Sortieren und der Mittel zum Vergleichen und Auswählen aufweist.

4. Rechnersystem nach Anspruch 3, bei welchem verschiedene Bereiche der Mittel (32, 33) zum Speichern verschiedene Arbitrationsdaten aus der CPU speichern, um für eine Mehrzahl der peripheren Einheiten gleichzeitig durch eine Arbitration zu entscheiden.

5. Rechnersystem nach Anspruch 3 oder Anspruch 4, bei welchem verschiedene der Mittel (32, 33) zum Speichern verschiedene aus der CPU stammende Arbitrationsdaten für verschiedene Arbitrationsebenen für eine einzelne Peripherieeinrichtung speichern.

6. Rechnersystem nach irgendeinem der vorgehenden Ansprüche, das aufweist: einen Datenbus (27-1) und einen Adreßbus (27-2), welche die CPU (10) und die peripheren Einrichtungen verbinden und die Arbitrationsmittel (20) für eine Soft-Anforderung mit einer Mehrzahl von Registern (43, 46) versehen sind, wobei jedes Register aufweist: einen mit dem Datenbus verbundenen Eingangsanschluß und einen mit dem Adreßbus verbundenen Ausgangsanschluß, um Adreßdaten zu vermitteln, die eine zugewiesene periphere Einheit anzeigen, um mit einem zugewiesenen DMA-Kanal zu kommunizieren.

FIG.1

EP 0 283 580 B1

FIG.2

FIG.3

| T1 | T2 | T3 | T4 | T5 | T6 | T7 | T8 | T9 | T10 | T11 | T12 | T13 | T14 | T15 | T16 | T17 | T18 | T19 | T20 |

+ SOFTREQUEST

– SOFTPREEMPT

+ ARB/–GRANT

ADDRESS VALID

–TC

FIG.4

# FIG.5

```
                    START

        ┌──────────────────────────────┐
        │                              │
        ▼                              │
   ◇ INTERRUPT ◇──N──────────────────┘
   ◇ RECEIVED ◇
        │
        Y
        │
        ▼
   ◇ INTERRUPT          ◇──N──────►  ARBITRATE
   ◇ FROM SOFT REQUEST  ◇
   ◇ PERIPHERAL         ◇
        │
        Y
        │
        ▼
   ┌──────────────────────────────┐
   │ WRITE CHANNEL PRIORITY       │
   │ ASSIGNMT. TO SOFT REQ. ARBTR.│
   └──────────────────────────────┘
        │
        ▼
   ┌──────────────────────────────┐
   │ WRITE SAME CHANNEL PRIORITY  │
   │ ASSIGNMT. TO ONE OF REGS. 32,33│
   └──────────────────────────────┘
        │
        ▼
   ┌──────────────────────────────┐
   │ WRITE PORT ADDR. OF PERIPH. TO│
   │ RESP. REG. 45,46             │
   └──────────────────────────────┘
        │
        ▼
   ┌──────────────────────────────┐
   │ ISSUE +ARB/-GRANT            │
   │ SIGNAL                       │
   └──────────────────────────────┘
        │
        ▼
   ┌──────────────────────────────┐
   │ ISSUE -SOFTPREEMPT           │
   │ SIGNAL                       │
   └──────────────────────────────┘
        │
        ▼
   ◇ WIN ON ◇──N──────┐
   ◇ ARBUS  ◇
        │             │
        Y             │
        │             │
        ▼             │
   ┌─────────┐        │
   │ ISSUE   │        │
   │ DREQ N  │────────┘
   └─────────┘
```

PERFORMED BY CPU

```
        ┌──────────────────────────┐
        ▼                          │
   ◇ DACK N ◇──N──────────────────┘
   ◇  = 0   ◇
        │                          │
        Y                          │
        │                          │
        ▼                          │
   ◇ -IOR      ◇──N───────────────┘
   ◇ 8 -IOW=1  ◇
        │
        Y
        │
        ▼
   ┌──────────────┐
   │ ENABLE       │
   │ REGS. 45,46  │
   └──────────────┘
        │
        ▼
   ┌──────────────┐
   │ PERFORM      │
   │ DMA TRANSFER │
   └──────────────┘
        │
        ▼
       END
```

FIG. 6

```
                    ( START )
                        │
                        ▼
                  ┌───────────┐
                  │ SET CH.= 0│
                  └───────────┘
                        │
          ┌─────────────┤
          │             ▼
          │          ╱────────╲        Y
          │         ╱ CH.> # CHS.╲────────────────┐
          │         ╲            ╱                 │
          │          ╲────────╱                    ▼
          │             │ N                    ( STOP )
          │             ▼
          │   ┌──────────────────────┐
          │   │ WRITE CH. ADDR., COUNT. MODE │
          │   │      8  MASK  REGS.   │
          │   └──────────────────────┘
          │             │
          │             ▼
          │   ┌──────────────────────┐
          │   │ WRITE ARB. REG. WITH CH. │
          │   │ NO.; SET TIME = 0 ;  SET │
          │   │   SOFT REQ. LATCH     │
          │   └──────────────────────┘
          │             │
          │   ┌─────────┤
          │   │         ▼
          │   │      ╱────────╲      Y
          │   │     ╱ TIME > T_MAX ╲──────────────────────┐
          │   │     ╲            ╱                         │
          │   │      ╲────────╱                            │
          │   │         │ N                                │
          │   │         ▼                                  │
          │   │   ┌──────────┐                             │
          │   │   │READ STATUS│                            │
          │   │   └──────────┘                             │
          │   │         │                                  │
   ┌──────────┐         ▼                                  │
   │ TIME =   │ N    ╱────────╲      Y                     │
   │TIME+TIMEUNIT│◄───╱ CH. DONE ╲───┐                     │
   └──────────┘      ╲            ╱   │                     │
                      ╲────────╱     │                     │
                                     ▼                     │
                          ┌────────────────────┐           │
                          │ READ CH. ADDRESS, COUNT │      │
                          │ MODE 8 MASK REGS.   │          │
                          └────────────────────┘           │
                                     │                     │
                                     ▼                     │
                                 ╱────────╲     N          │
                                ╱ CORRECT  ╲───────────────┤
                                ╲  VALUE   ╱                │
                                 ╲────────╱                 ▼
                                     │ Y          ┌──────────────┐
                                     ▼            │ PRINT ERROR  │
                               ┌──────────┐       │   MESSAGE    │
                               │CH.= CH+1 │       └──────────────┘
                               └──────────┘              │
                                                         ▼
                                                     ( STOP )
```

FIG.7

EP 0 283 580 B1